# EUROPÄISCHE PATENTSCHRIFT

(11) **EP 3 114 365 B1**
(45) Veröffentlichungstag und Bekanntmachung des Hinweises auf die Patenterteilung: **20.05.2020**
(21) Anmeldenummer: 15707378.4
(22) Anmeldetag: 03.03.2015
(51) Int. Cl.: F16D 48/04, B60K 23/02

(54) **KUPPLUNGSKRAFTVERSTÄRKER MIT IM BEREICH DER KOLBENSTANGE ANGEORDNETEN SPEZIELLEN DYNAMISCHEN DICHTUNGSMITTELN**
CLUTCH SERVO WITH SPECIAL DYNAMIC SEALING MEANS PROVIDED IN THE REGION OF THE PISTON ROD
AMPLIFICATEUR DE FORCE D'EMBRAYAGE COMPRENANT DES MOYENS D'ÉTANCHÉITÉ DYNAMIQUES SPÉCIFIQUES DISPOSÉS DANS LA ZONE DE LA TIGE DE PISTON

(30) Priorität: 05.03.2014 DE 102014102880
(43) Veröffentlichungstag der Anmeldung: 11.01.2017
(73) Patentinhaber: KNORR-BREMSE Systeme für Nutzfahrzeuge GmbH, 80809 München (DE)
(72) Erfinder: HÖS, Levente, H-1047 Budapest (HU); TASNÁDI, Tibor, H-1202 Budapest (HU)
(86) Internationale Anmeldenummer: PCT/EP2015/054364
(87) Internationale Veröffentlichungsnummer: WO 2015/132233

(56) Entgegenhaltungen:
- EP-B1- 0 014 143
- WO-A1-2009/092395
- DE-A1- 3 115 450
- DE-A1-102007 051 148
- US-A- 4 274 521

## Beschreibung

Die Erfindung betrifft einen Kupplungskraftverstärker zur Verstärkung einer hydraulischen Kupplungspedalfusskraft mittels Pneumatikdruck, umfassend eine Kolbenstange, die seitens eines distalen Endes über einen in einem Gehäuse angeordneten Hydraulikraum zur direkten Kupplungsbetätigung mit Hydraulikdruck beaufschlagbar ist, und einen an der Kolbenstange angebrachten pneumatischen Verstärkerkolben, der von einem in einem Gehäuse angeordneten Pneumatikraum zur zusätzlichen Kupplungskraftverstärkung mit Druckluft beaufschlagbar ist, sowie eine hydraulisches Steuerelement, dessen von der Kupplungspedalkraft hydraulisch beeinflusste Stellung die Beaufschlagung des Verstärkerkolbens mit Druckluft steuert, wobei der Hydraulikraum gegenüber dem benachbarten Pneumatikraum mit im Bereich der Kolbenstange angeordneten dynamischen Dichtungsmitteln abgedichtet ist.

Derartige Kupplungskraftverstärker kommen vornehmlich in Nutzfahrzeugen zum Einsatz, um eine hydraulisch erzeugte Kupplungspedalfusskraft mittels Pneumatikdruck zu verstärken, da Kupplungen von Nutzfahrzeugen in der Regel nur unter großen Kraftaufwand betätigbar sind.

Die DE 10 2007 051 148 A1 offenbart einen gattungsgemäßen Kupplungskraftverstärker mit einem Verstärkerkolben, der mittels Pneumatikdruck verschiebbar ist, um eine Kupplungskraft zu verstärken. Ein hydraulisch von der Kupplungspedalfusskraft betätigbares Steuerelement steuert über eine Ventilmechanik den zusätzlich zur Kupplungspedalfusskraft hinzugegebenen Pneumatikdruck, mit dem der Verstärkerkolben beaufschlagbar ist.

Der Kupplungskraftverstärker ist in einem Gehäuse angeordnet, in welchem der dem Verstärkerkolben zugeordnete Pneumatikraum gegenüber dem die Kolbenstange stirnseitig beaufschlagenden Hydraulikraum abzudichten ist. Dies erfolgt über zwei axial benachbart zueinander angeordnete und ortsfest am Gehäuse befestigte Dichtringe, welche innendichtend an der Kolbenstange zur Anlage kommen.

Problematisch dabei ist, dass eine gemeinsame, für beide Dichtringe ideale Lauffläche nicht gewährleistet werden kann. Während der eine, dem Hydraulikraum zugeordnete Dichtring eine recht glatte Oberfläche der Kolbenstange erfordert, erfordert der benachbarte, dem Pneumatikraum zugeordnete Dichtring eine relativ rauere und mit Fett geschmierte Oberfläche. Im Falle der gemeinsamen Lauffläche wird die Schmierung des pneumatischen Dichtrings durch den hydraulischen Dichtring verringert. Daher läuft der pneumatische Dichtring fast trocken und reibt sich früher ab, als die Lebensdauer des Kupplungskraftverstärkers. Als Folge davon kann der pneumatische Dichtring nicht mehr abdichten, wodurch eine größere Menge von Druckluft in den Hydraulikraum gelangen kann, was im Extremfall zu einer verschlechterten oder gar keinen Steuerbarkeit des Kupplungskraftverstärkers über die Hydraulikflüssigkeit führen kann.

Die US 4 274 521 A offenbart eine kombinierte hydropneumatische Steuerung für die Kupplung und für das Getriebe, die synchron mit der Öffnung der Kupplung das Getriebe entriegelt und somit ein Schalten ermöglicht. Diese Steuerung wirkt zugleich als Kupplungskraftverstärker.

Die WO 2009/092 395 A1 offenbart ein weiteres Betätigungssystem für eine pneumatisch betätigbare Kupplung, bei dem die Kupplung durch Druckbeaufschlagung eines Arbeitsraums ausgerückt wird. Die Druckbeaufschlagung wird über ein Vorsteuerventil gesteuert, das mit einer Steuerkraft mechanisch gegen eine Rückstellkraft betätigbar ist.

Die EP 0014 143 B1 offenbart einen Kupplungskraftverstärker, der zwischen einer hydraulischen Dichtung und einer pneumatischen Dichtung entlang der Kolbenstange einen hydraulischen Sekundärraum aufweist, der zur Atmosphäre hin entlüftet ist. Hierdurch kann bei Defekt der hydraulischen Dichtung Hydraulikflüssigkeit unmittelbar in die Umwelt austreten.

Auch die DE 3115 450 offenbart einen Kupplungskraftverstärker, der zwischen einer hydraulischen Dichtung und einer pneumatischen Dichtung eine Entlüftung aufweist, dessen Austrittsöffnung an die Atmosphäre ist allerdings mit einer Schutzkappe vor eindringendem Schmutz geschützt.

Es ist daher die Aufgabe der vorliegenden Erfindung einen Kupplungskraftverstärker der gattungsgemäßen Art dahingehend weiter zu verbessern, dass den zwischen dem Pneumatikraum und Hydraulikraum angeordneten dynamischen Dichtungsmitteln durch Verringerung des Verschleißes eine längere Lebensdauer verliehen wird.

Die Aufgabe wird ausgehend von einem Kupplungskraftverstärker gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die dynamischen Dichtungsmittel aus einer im Bereich des distalen Endes der Kolbenstange angeordneten und außendichtend gegenüber dem Hydraulikraum wirkenden hydraulischen Dichtung sowie einer gehäuseseitig angeordneten und innendichtend gegenüber der Kolbenstange wirkenden pneumatischen Dichtung bestehen.

Der Vorteil der erfindungsgemäßen Lösung liegt insbesondere darin, dass die pneumatische Dichtung hierdurch mit einer konstruktionsgerechten Lauffläche ausgeführt werden kann, um die Lebensdauer zu erhöhen. Denn die Lauffläche der dynamischen hydraulischen Dichtung ist nicht dieselbe wie die Lauffläche der pneumatischen Dichtung zwischen Hydraulikraum und Pneumatikraum.

Gemäß einer bevorzugten Ausführungsform besteht die hydraulische Dichtung aus mindestens zwei axial zueinander beabstandet angeordneten hydraulischen Dichtringen, die an einem endseitig der Kolbenstange ausgebildeten hydraulischen Kolben angebracht sind. Der Durchmesser des hydraulischen Kolbens ist dabei größer als der Durchmesser der Kolbenstange, welche somit kleiner und leichter ausgeführt werden kann.

Die pneumatische Dichtung besteht demgegenüber vorzugsweise aus einem einzigen pneumatischen Dichtring, der beispielsweise an einer am Gehäuse angebrachten und in den Pneumatikraum hineinragenden Führungshülse der Kolbenstange montiert werden kann.

Der zwischen der hydraulischen Dichtung und der pneumatischen Dichtung entlang der Kolbenstange vorhandene hydraulische Sekundärraum ist gemäß der Erfindung zur Atmosphäre hin entlüftet. Hierdurch wird ausgeschlossen, dass Druckluft, welche ausgehend vom Pneumatikraum die pneumatische Dichtung überströmend in den Sekundärraum gelangt, in den Hydraulikkreis eindringen kann.

Die Entlüftung des pneumatischen Sekundärraums über den hiermit verbundenen hydraulischen Sekundärraum erfolgt vorzugsweise über einen in Gehäuse ausgebildeten Querkanal mit einer Hauptentlüftung im Bereich des hydraulisch betätigten Steuerelements. Da das hydraulisch betätigte Steuerelement wiederum eine Ventilmechanik betätigt, welche einen Entlüftungsanschluss zur Entlüftung des Pneumatikraums aufweist, kann dieser Entlüftungsanschluss zum Zwecke der Sekundärraumentlüftung mit genutzt werden.

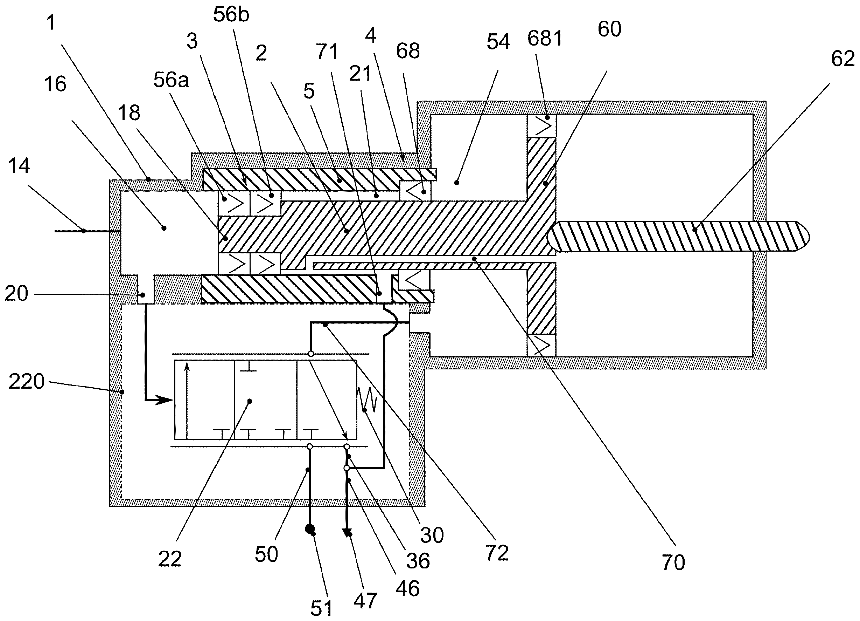

Weitere die Erfindung verbessernden Maßnahmen werden nachstehend gemeinsam mit der Beschreibung eines bevorzugten Ausführungsbeispiels der Erfindung anhand der Figur näher dargestellt.

Die Figur zeigt einen schematisierten Längsschnitt durch einen Kupplungskraftverstärker.

Gemäß Figur umfasst der Kupplungskraftverstärker einen Hydraulikanschluss 1, über den ein von einem - nicht weiter dargestellten - Kupplungspedal manuell erzeugter Hydraulikdruck in einen Kupplungsraum 2 gelangt, in dem eine Kolbenstange 18 des Kupplungskraftverstärkers verschiebbar angeordnet ist. Über Hydraulikdurchgänge 20 ist der Hydraulikraum 16 mit einem Steuerventil 220 verbunden, dessen Kernelement ein Steuerelement 22 ist.

Das Steuerventil 220 besitzt eine 3/3-Wege Ventilfunktion und damit drei Durchflusswege und drei Schaltzustände. Die drei Durchflusswege bestehen aus einem Querkanal 72, welcher mit einem Pneumatikraum 54 verbunden ist, einem Entlüftungsdurchgang 36, welcher mit einer Hauptentlüftung 46 in Verbindung steht, wobei diese mit der Umgebung verbunden ist, und einem Pneumatikeingangsraum 50, welcher mit einer Druckluftquelle 51 verbunden ist.

Eine Rückstellfeder 30 schiebt das Steuerelement 22 bei vermindertem Hydraulikdruck in dem Hydraulikraum 16 in seine Ausgangsposition zurück. In dieser Position verbindet das Steuerventil 220 den Querkanal 72 mit dem Entlüftungsdurchgang 36. Somit kann in der Ausgangsposition Druckluft aus dem Pneumatikraum 54 über den Querkanal 72, den Entlüftungsdurchgang 36 und die Hauptentlüftung 46 an die Umgebung abgegeben werden.

Wird der Druck in dem Hydraulikraum 20 erhöht, so wird das Steuerventil 220 in ihren zweiten Schaltzustand bewegt, in dem die drei Durchflusswege verschlossen sind.

Wird der Druck in dem Hydraulikraum 20 weiter erhöht, so wird das Steuerventil 220 in ihren dritten Schaltzustand bewegt, in dem der Querkanal 72 mit dem Pneumatikeingangsraum 50 verbunden ist und somit eine Druckzufuhr zum Pneumatikraum 54 auslöst.

Der Pneumatikraum 54 ist mit einer im Gehäuse 1 angebrachten und in den Pneumatikraum 54 hineinragenden Führungshülse 5 einer Kolbenstange 2 montiert und kommt durch eine pneumatische Dichtung 4, bestehend aus einem pneumatischen Dichtungsring 68, innendichtend an der Außenfläche der Kolbenstange 2 zur Anlage. Demgegenüber ist im Bereich des distalen Endes der Kolbenstange 2 eine außendichtend gegenüber dem Hydraulikraum 16 wirkende hydraulische Dichtung 3 vorgesehen, die aus den beiden axial zueinander beabstandet angeordneten hydraulischen Dichtringen 56a und 56b besteht. Die beiden hydraulischen Dichtringe 56a und 56b sind an einem endseitig der Kolbenstange 2 ausgebildeten hydraulischen Kolben 18 angebracht.

Im Pneumatikraum 54 ist eine nicht dargestellte Feder angeordnet, die einen an der Kolbenstange 2 angebrachten Verstärkerkolben 60 leicht vorspannt, so dass ein zum Betätigen der - nicht weiter dargestellten - Kupplung vorgesehener Stößel 62, der an dem Verstärkerkolben 60 angebracht ist, an entsprechenden Bauteilen anliegt, ohne diese zu betätigen. Die Kolbenstange 2, der Verstärkerkolben 60 und der Stößel 62 sind aneinander befestigt und entlang einer gemeinsamen Achse ausgerichtet, die auch der Richtung entspricht, in der diese Bauteile verschiebbar sind.

Der Verstärkerkolben 60 ist über eine pneumatische Dichtung 681 gegen die Innenwandung des Pneumatikraums 54 abgedichtet. Im Falle einer Druckzufuhr zum Pneumatikraum 54 verschiebt die einströmende Druckluft den Verstärkerkolben 60 in dessen betätigte Stellung, so dass über den Stößel 62 die Kupplung betätigt wird.

Der zwischen der hydraulischen Dichtung 3 und der pneumatischen Dichtung 4 entlang der Kolbenstange 2 und der Führungshülse 5 vorhandene hydraulische Sekundärraum 21 ist über einen Entlüftungskanal 71 zur Atmosphäre hin entlüftet. Zusätzlich ist der hydraulische Sekundärraum 21 über die hiermit verbundene Sekundärraumentlüftung 70, die als Bohrung in der Kolbenstange 2 ausgebildet ist, mit dem Pneumatikraum 54 verbunden, welcher am Verstärkerkolben 6 dem Sekundärraum gegenüberliegt. Die Entlüftung des pneumatischen Sekundärraums und des hiermit verbundenen hydraulischen Sekundärraums 21 erfolgt über die Sekundärraumentlüftung 70 mit Entlüftungskanal 71 zur Hauptentlüftung 46 im Bereich des hydraulisch betätigten Steuerelements 22. Die Hauptentlüftung 46 ist mit einem Rückschlagventil 47 gegenüber von außen eindringenden Einflüssen geschützt.

## Patentansprüche

1. Kupplungskraftverstärker zur Verstärkung einer hydraulischen Kupplungspedalfußkraft mittels Pneumatikdruck, umfassend:
- eine Kolbenstange (2), die seitens eines distalen Endes über einen in einem Gehäuse (1) angeordneten Hydraulikraum (16) zur direkten Kupplungsbetätigung mit Hydraulikdruck beaufschlagbar ist,
- einen an der Kolbenstange (2) angebrachten pneumatischen Verstärkerkolben (60), der von einem in einem Gehäuse (1) angeordneten Pneumatikraum (54) zur zusätzlichen Kupplungskraftverstärkung mit Druckluft beaufschlagbar ist,
- ein hydraulisches Steuerelement (22), dessen von der Kupplungspedalkraft hydraulisch beeinflusste Stellung die Beaufschlagung des Verstärkerkolbens (60) mit Druckluft steuert,
- wobei der Hydraulikraum (16) gegenüber dem benachbarten Pneumatikraum (54) mit im Bereich der Kolbenstange (2) angeordneten dynamischen Dichtungsmitteln abgedichtet ist, wobei die dynamischen Dichtungsmittel aus
- einer im Bereich des distalen Endes der Kolbenstange (2) angeordneten und außendichtend gegenüber dem Hydraulikraum (16) wirkenden hydraulischen Dichtung (3) sowie
- einer gehäuseseitig angeordneten und innendichtend gegenüber der Kolbenstange (2) wirkenden pneumatischen Dichtung (4) bestehen,
**dadurch gekennzeichnet, dass** der zwischen der hydraulischen Dichtung (3) und der pneumatischen Dichtung (4) entlang der Kolbenstange (2) vorhandene hydraulische Sekundärraum (21) zur Atmosphäre hin entlüftet ist, indem der hydraulische Sekundärraum (21) über eine hiermit verbundene Bohrung (70) in der Kolbenstange (2) mit einem zum Pneumatikraum (54) am Verstärkerkolben (60) gegenüberliegenden pneumatischen Sekundärraum verbunden ist.

2. Kupplungskraftverstärker nach Anspruch 1,
**dadurch gekennzeichnet, dass** die hydraulische Dichtung (3) aus mindestens zwei axial zueinander beabstandet angeordneten hydraulischen Dichtringen (56a, 56b) besteht, die an einem endseitig der Kolbenstange (2) ausgebildeten hydraulischen Kolben (18) angebracht sind.

3. Kupplungskraftverstärker nach Anspruch 1,
**dadurch gekennzeichnet, dass** die pneumatische Dichtung (4) aus einem Dichtring (68) besteht, der an einer am Gehäuse (1) angebrachten und in den Pneumatikraum (54) hineinragenden Führungshülse (5) der Kolbenstange (2) montiert ist.

4. Kupplungskraftverstärker nach Anspruch 1,
**dadurch gekennzeichnet, dass** die Entlüftung des pneumatischen Sekundärraums (23) über den hiermit verbundenen hydraulischen Sekundärraum (21) erfolgt, welcher über einen Entlüftungskanal (71) mit einer Hauptentlüftung (46) im Bereich des hydraulisch betätigten Steuerelements (22) zur Druckluftbeaufschlagung des Verstärkerkolbens (60) verbunden ist.

## Claims

1. A clutch servo for boosting a hydraulic clutch-pedal foot force by means of pneumatic pressure, comprising:
- a piston rod (2) having a distal end to which hydraulic pressure can be applied via a hydraulic chamber (16) arranged in a housing (1) in order to directly actuate the clutch;
- a pneumatic booster piston (60) that is mounted on the piston rod (2) and to which compressed air from a pneumatic chamber (54) arranged in a housing (1) can be applied in order to further boost clutch force;
- a hydraulic control element (22) whose position is hydraulically influenced by the clutch-pedal force and controls the actuation of the booster piston (60) by means of compressed air;
- the hydraulic chamber (16) being sealed with respect to the adjacent pneumatic chamber (54) by dynamic sealing means arranged in the region of the piston rod (2), these dynamic sealing means comprising:
- a hydraulic seal (3) that is arranged in the region of the distal end of the piston rod (2) and has an external sealing effect with respect to the hydraulic chamber (16), and
- a pneumatic seal (4) that is arranged on the housing and has an internal sealing effect with respect to the piston rod (2),
**characterised in that** the secondary hydraulic chamber (21) located between the hydraulic seal (3) and the pneumatic seal (4) along the piston rod (2) is vented to the atmosphere by connecting the secondary hydraulic chamber (21) via a drilled hole (70), itself connected to the secondary hydraulic chamber (21), in the piston rod to a secondary pneumatic chamber located opposite the pneumatic chamber (54) on the booster piston (60).

2. A clutch servo according to claim 1,
**characterised in that** the hydraulic seal (3) comprises at least two hydraulic sealing rings (56a, 56b) that are spaced apart from one another axially and mounted on a hydraulic piston (18) arranged at one end of the piston rod (2).

3. A clutch servo according to claim 1,
**characterised in that** the pneumatic seal (4) comprises a sealing ring (68) that is mounted on a guiding sleeve (5) of the piston rod (2), which is in turn fitted to the housing (1) and projects into the pneumatic chamber (54).

4. A clutch servo according to claim 1,
**characterised in that** the secondary pneumatic chamber (23) is vented via the secondary hydraulic chamber (21) that is connected both to the secondary pneumatic chamber (23) and via a venting channel (71) to a main vent (46) in the region of the hydraulically actuated control element (22) in order to apply compressed air to servo piston (60).

## Revendications

1. Amplificateur de force d'embrayage pour amplifier, au moyen d'une pression pneumatique, une force hydraulique de pédale d'embrayage, comprenant :
- une tige (2) de piston, qui, du côté d'une extrémité distale, peut, par un espace (16) hydraulique disposé dans un boîtier (1), être soumise, pour l'actionnement direct de l'embrayage, à une pression hydraulique,
- un piston (60) pneumatique d'amplificateur, qui est monté sur la tige (2) de piston et qui peut, pour une amplification supplémentaire de la force de l'embrayage, être alimenté en air comprimé par un espace (54) pneumatique disposé dans un boîtier (1),
- un élément (22) hydraulique de commande, dont la position, influencée hydrauliquement par la force de la pédale de l'embrayage, commande l'alimentation en air comprimé du piston (60) d'amplificateur,
- dans lequel l'espace (16) hydraulique est rendu étanche, par rapport à l'espace (54) pneumatique voisin, par des moyens d'étanchéité dynamiques disposés dans la région de la tige (2) de piston, les moyens d'étanchéité dynamiques étant constitués
- d'une étanchéité (3) hydraulique, disposée dans la région de l'extrémité distale de la tige (2) de piston et agissant de manière étanche vers l'extérieur vis-à-vis de l'espace (16) hydraulique, ainsi que
- d'une étanchéité (4) pneumatique, disposée du côté du boîtier et agissant de manière étanche vers l'intérieur vis-à-vis de la tige (2) de piston,
**caractérisé en ce que** l'espace (21) hydraulique secondaire, présent entre l'étanchéité (3) hydraulique et l'étanchéité (4) pneumatique, le long de la tige (2) de piston est mis à l'atmosphère par le fait que l'espace (21) hydraulique secondaire communique, par un trou (70) de communication avec lui dans la tige (2) de piston, avec un espace pneumatique secondaire opposé à l'espace (54) pneumatique du piston (60) d'amplificateur.

2. Amplificateur de force d'embrayage suivant la revendication 1,
**caractérisé en ce que** l'étanchéité (3) hydraulique est constituée d'au moins deux bagues d'étanchéité (56a, 56b) hydrauliques, montées à distance les unes des autres axialement, qui sont mises sur un piston (18) hydraulique constitué à un côté de l'extrémité de la tige (2) de piston.

3. Amplificateur de force d'embrayage suivant le revendication 1,
**caractérisé en ce que** l'étanchéité (4) pneumatique est constituée d'une bague (68) d'étanchéité, qui est montée sur un manchon (5) de guidage de la tige (2) de piston, mis sur le boîtier (1) et pénétrant dans l'espace (54) pneumatique.

4. Amplificateur de force d'embrayage suivant la revendication 1,
**caractérisé en ce que** la mise à l'atmosphère de l'espace (23) pneumatique secondaire s'effectue par l'espace (21) hydraulique secondaire, qui communique avec lui et qui, par un conduit (71) de mise à l'atmosphère, communique avec une mise à l'atmosphère (46) principale dans la région de l'élément (22) commandé hydrauliquement pour l'alimentation en air comprimé du piston (60) d'amplificateur.
